(19) Europäisches Patentamt
European Patent Office
Office européen des brevets

(11) **EP 3 912 084 B1**

(12) **EUROPEAN PATENT SPECIFICATION**

(45) Date of publication and mention
of the grant of the patent:
**17.12.2025  Bulletin 2025/51**

(21) Application number: **20704069.2**

(22) Date of filing: **15.01.2020**

(51) International Patent Classification (IPC):
*G06F 18/2413* [(2023.01)]     *G06V 10/764* [(2022.01)]
*G06V 10/82* [(2022.01)]     *G06V 20/52* [(2022.01)]

(52) Cooperative Patent Classification (CPC):
**G06F 18/2413; G06V 10/764; G06V 10/82;**
**G06V 20/52**

(86) International application number:
**PCT/GB2020/050081**

(87) International publication number:
**WO 2020/148536 (23.07.2020 Gazette 2020/30)**

(54) **CLASSIFIER USING DATA GENERATION**

KLASSIFIZIERER MIT DATENERZEUGUNG

CLASSIFICATEUR UTILISANT LA GÉNÉRATION DE DONNÉES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **17.01.2019  GB 201900672**

(43) Date of publication of application:
**24.11.2021  Bulletin 2021/47**

(73) Proprietor: **Smiths Detection France S.A.S.**
**94400 Vitry-sur-Seine (FR)**

(72) Inventors:
• **MERIGUET, Pierre**
**94400 Vitry Sur Seine (FR)**
• **TOBIAS, Luis**
**94400 Vitry Sur Seine (FR)**
• **GADI, Najib**
**94400 Vitry Sur Seine (FR)**
• **COHEN, Laurent**
**75775 Paris (FR)**
• **ATIF, Jamal**
**75775 Paris (FR)**

(74) Representative: **Vienne, Aymeric Charles Emile**
**Mathys & Squire**
**The Shard**
**32 London Bridge Street**
**London SE1 9SG (GB)**

(56) References cited:
**US-B1- 9 996 890**

• **ZHAO ZIHAO ET AL: "A GAN-Based Image Generation Method for X-Ray Security Prohibited Items", 2 November 2018, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 420 - 430, ISBN: 978-3-319-10403-4, XP047493288**
• **JACCARD NICOLAS ET AL: "Tackling the x-ray cargo inspection challenge using machine learning", PROCEEDINGS OF SPIE; [PROCEEDINGS OF SPIE ISSN 0277-786X VOLUME 10524], SPIE, US, vol. 9847, 12 May 2016 (2016-05-12), pages 98470N - 98470N, XP060068552, ISBN: 978-1-5106-1533-5, DOI: 10.1117/12.2222765**
• **MAAYAN FRID-ADAR ET AL: "GAN-based Synthetic Medical Image Augmentation for increased CNN Performance in Liver Lesion Classification", ARXIV.ORG, CORNELL UNIVERSITY LIBRARY, 201 OLIN LIBRARY CORNELL UNIVERSITY ITHACA, NY 14853, 3 March 2018 (2018-03-03), XP080857543**

- **IAN J GOODFELLOW ET AL: "Generative Adversarial Nets", 10 June 2014 (2014-06-10), XP055556208, Retrieved from the Internet <URL:https://arxiv.org/pdf/1406.2661.pdf> [retrieved on 20190213]**

- **IAN J GOODFELLOW ET AL: "Generative Adversarial Nets", 10 June 2014 (2014-06-10), XP055556208, Retrieved from the Internet <URL:https://arxiv.org/pdf/1406.2661.pdf> [retrieved on 20190213]**

## Description

### Field of the invention

The invention relates but is not limited to generating a classifier configured to detect an object corresponding to a type of interest in an inspection image generated using penetrating radiation. The invention also relates but is not limited to determining whether or not an object corresponding to a type of interest is present in an inspection image generated using penetrating radiation. The invention also relates but is not limited to producing a device configured to determine whether or not an object corresponding to a type of interest is present in an inspection image generated using penetrating radiation. The invention also relates but is not limited to corresponding devices and computer programs or computer program products.

### Background

Inspection images of containers containing cargo may be generated using penetrating radiation. In some examples, a user may want to detect objects corresponding to a type of interest, such as a threat (such as a weapon, an explosive material or a radioactive material) or a contraband product (such as drugs or cigarettes) on the inspection images. Detection of such objects may be difficult. In some cases, the object may not be detected at all. In cases where the detection is not clear from the inspection images, the user may inspect the container manually, which may be time consuming for the user.

Document ZHAO ZIHAO ET AL: "A GAN-Based Image Generation Method for X-Ray Security Prohibited Items", 2 November 2018, ADVANCES IN DATABASES AND INFORMATION SYSTEMS; SPRINGER INTERNATIONAL PUBLISHING, CHAM, PAGE(S) 420 - 430, discloses GAN-based image generation for x-ray security.

### Summary of the Invention

Aspects and embodiments of the invention are set out in the appended claims. These and other aspects and embodiments of the invention are also described herein.

Any feature in one aspect of the invention may be applied to other aspects of the invention, in any appropriate combination. In particular, method aspects may be applied to device and computer program aspects, and vice versa.

Furthermore, features implemented in hardware may generally be implemented in software, and vice versa. Any reference to software and hardware features herein should be construed accordingly.

### Brief Description of Drawings

Embodiments of the present invention will now be described, by way of example, with reference to the accompanying drawings, in which:

Figure 1 shows a flow chart illustrating an example method according to the disclosure;
Figure 2 schematically illustrates an example system and an example device configured to implement the example method of Figure 1 ;
Figure 3 illustrates an example inspection image according to the disclosure;
Figure 4 schematically illustrates example generated training images;
Figure 5 shows a flow chart illustrating a detail of the example method of Figure 1;
Figure 6 schematically illustrates an example generative adversarial network configured to implement the example method of Figure 1 ;
Figure 7 schematically illustrates example synthetized objects;
Figure 8 shows a flow chart illustrating another example method according to the disclosure; and
Figure 9 shows a flow chart illustrating another example method according to the disclosure.

In the figures, similar elements bear identical numerical references.

### Detailed Description of Example Embodiments

The disclosure discloses an example method for generating a classifier configured to detect an object corresponding to a type of interest in an inspection image generated using penetrating radiation (e.g. x rays, but other penetrating radiation is envisaged). In typical examples, the type of interest may be a threat, such as a weapon (e.g. a gun or a rifle), an explosive material, a radioactive material, and/or the type of interest may be a contraband product, such as drugs or cigarettes as non-limiting examples.

The disclosure also discloses an example method for determining whether or not an object corresponding to the type of interest is present in an inspection image generated using penetrating radiation.

The disclosure also discloses an example method for producing a device configured to determine whether or not an object corresponding to the type of interest is present in an inspection image generated using penetrating radiation.

The disclosure also discloses corresponding devices and computer programs or computer program products.

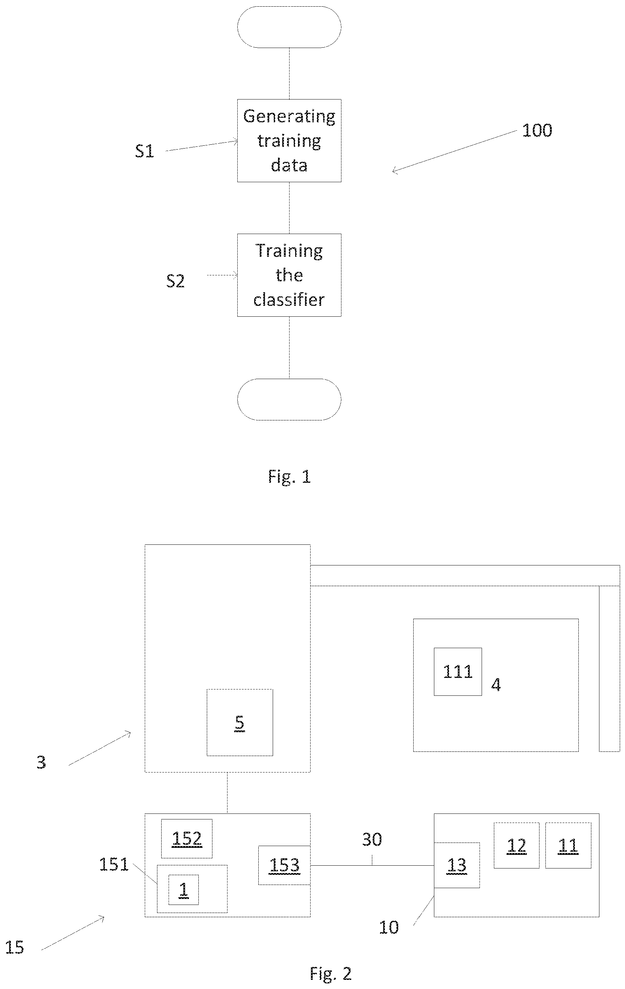

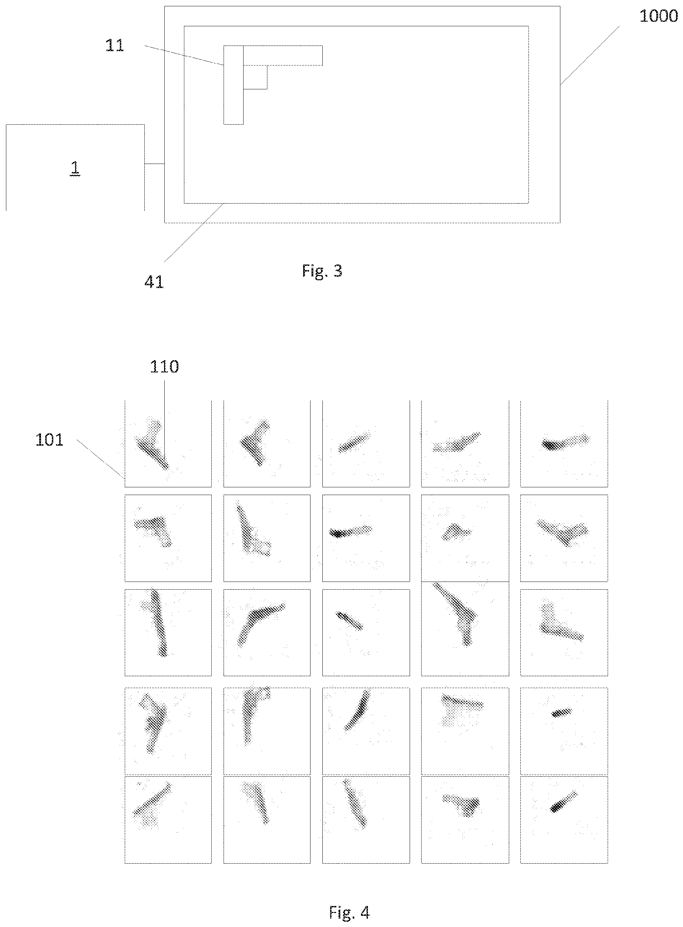

Figure 1 shows a flow chart illustrating an example method 100 according to the disclosure for generating a classifier 1 illustrated in Figures 2 and 3. Figure 2 also shows a device 15 configurable by the method 100 to determine whether or not an object 11 corresponding to a type of interest is present in an inspection image 1000, shown in Figure 3. The inspection image 1000 is generated using penetrating radiation, e.g. by the device 15. The method 100 illustrated in Figure 1 is also described in connection with Figure 4, showing a plurality of generated training images 101 comprising objects 110 corresponding to the type of interest, for training the classifier 1.

The method 100 of Figure 1 comprises in overview:

generating, at S1, training data comprising the plurality of training images 101 comprising the objects 110 corresponding to the type of interest; and

training, at S2, the classifier 1 by applying a machine learning algorithm, using the generated training data.

As disclosed in greater detail later, the training of the classifier 1 may be performed either using the generated training data or a combination of observed (i.e. real) training data and the generated training data.

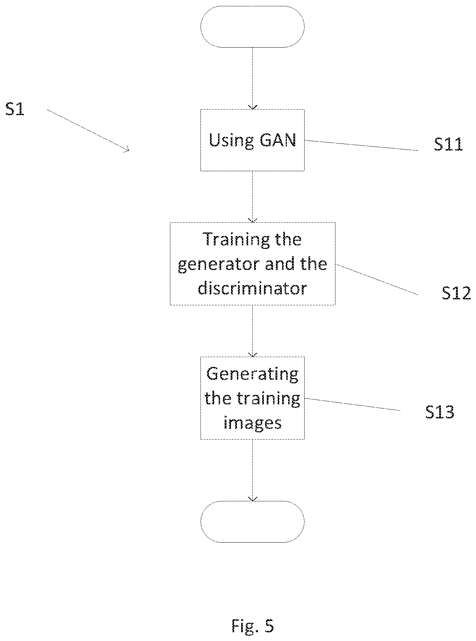

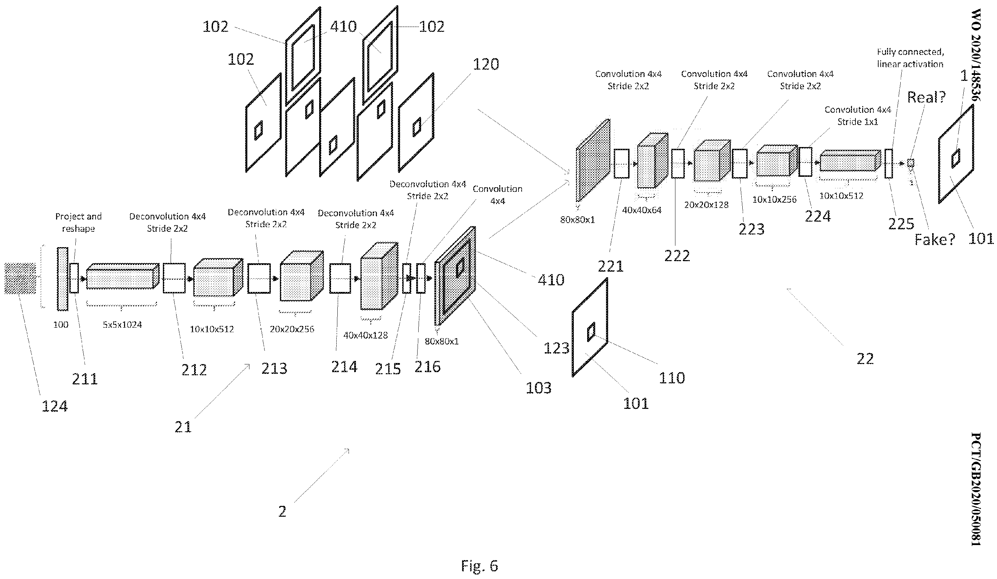

As illustrated in Figure 5, in some examples generating the training data at S1 may comprise using, at S11, a generative adversarial network 2, also called GAN 2, comprising a generator 21 and a discriminator 22, both illustrated in Figure 6. As described in more detail later, the generator 21 comprises a neural network, and the discriminator 22 comprises a neural network

As illustrated in Figure 5, in some examples generating at S1 the training data may also comprise training the generator 21 and the discriminator 22 using, at S12, initial training data comprising a plurality of observed images 102 generated using penetrating radiation, as illustrated in Figure 6. In some examples, one or more observed images 102 comprise an observed object 120 corresponding to the type of interest.

Referring back to Figure 5, in some examples generating at S1 the training data may comprise, at S13, generating the plurality of training images 101.

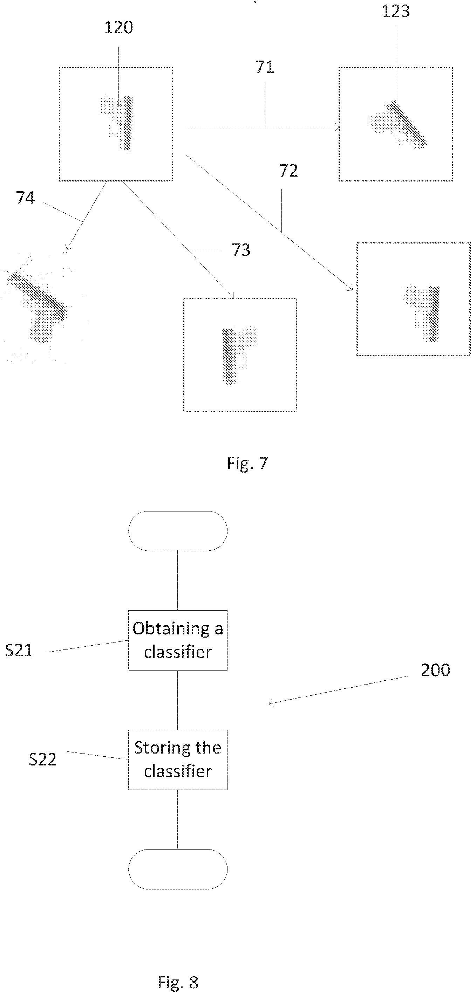

As described in more detail later in reference to Figure 8 showing a method 200, configuration of the device 15 involves storing, e.g. at S22, the classifier 1 at the device 15. In some examples the classifier 1 may be obtained at S21 (e.g. by generating the classifier 1 as in the method 100 of Figure 1). In some examples, obtaining the classifier 1 at S21 may comprise receiving the classifier 1 from another data source.

As described above the classifier 1 is derived from the training data using a machine learning algorithm, and is arranged to produce an output indicative of detection or not of an object 11 corresponding to the type of interest in the inspection image 1000.

The classifier 1 is arranged to detect more easily the presence or not of the object 11, after it is stored in a memory 150 of the device 15 (as shown in Figure 2), even though the process 100 for deriving the classifier 1 from the training data may be computationally intensive.

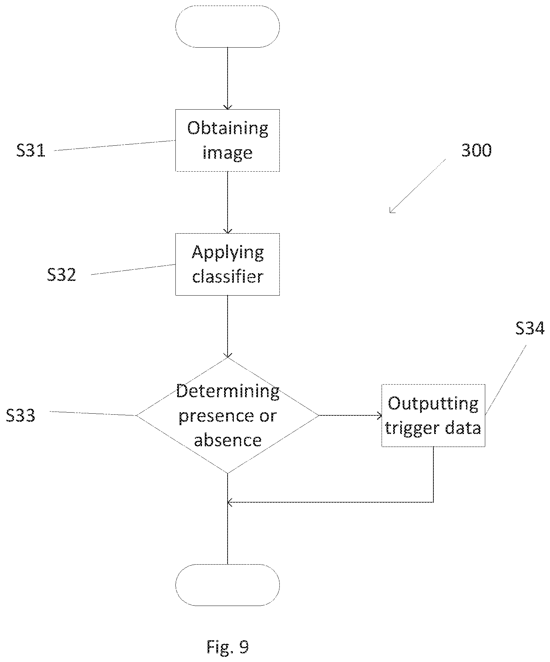

Once configured, the device 15 may provide an accurate detection of the object 11 by applying the classifier 1 to the inspection image 1000. The detection process is illustrated (as process 300) in Figure 9 (described later).

### Computer system and detection device

Figure 2 schematically illustrates an example computer system 10 and the device 15 configured to implement, at least partly, the example method 100 of Figure 1. In particular, in a preferred embodiment, the computer system 10 executes the machine learning algorithm to generate the classifier 1 to be stored on the device 15. Although a single device 15 is shown for clarity, the computer system 10 may communicate and interact with multiple such devices. The training data may itself be obtained using a plurality of observed images 102 acquired using the device 15 and/or using other, similar devices and/or using other sensors and data sources.

The computer system 10 of Figure 2 comprises a memory 11, a processor 12 and a communications interface 13.

The system 10 may be configured to communicate with one or more devices 15, via the interface 13 and a link 30 (e.g. Wi-Fi connectivity, but other types of connectivity may be envisaged).

The memory 11 is configured to store, at least partly, data, for example for use by the processor 12. In some examples the data stored on the memory 11 may comprise data such as the training data (and the data used to generate the training data) and/or the GAN 2 and/or the machine learning algorithm.

In some examples, the processor 12 of the system 10 may be configured to perform, at least partly, at least some of the steps of the method 100 of Figure 1 and/or the method 200 of Figure 8 and/or the method 300 of Figure 9.

The detection device 15 of Figure 2 comprises a memory 151, a processor 152 and a communications interface 153 (e.g. Wi-Fi connectivity, but other types of connectivity may be envisaged) allowing connection to the interface 13 via the link 30.

In a non-limiting example, the device 15 may also comprise an apparatus 3 acting as an inspection system, as described in greater detail later. The apparatus 3 may be integrated into the device 15 or connected to other parts of the device 15 by wired or wireless connection.

In some examples, as illustrated in Figure 2, the disclosure may be applied for inspection of a real container 4 containing a real object 111 corresponding to the type of interest. At least some of the methods of the disclosure may comprise obtaining the observed images 102, e.g. by irradiating, using penetrating radiation, one or more real objects 111 corresponding to the type of interest and/or one or more real containers 4 configured to contain cargo, and detecting radiation from the irradiated one or more real objects 111 and/or the irradiated one or more real containers 4. Alternatively or additionally, at least some of the methods of the disclosure may comprise obtaining the inspection image 1000 by irradiating, using penetrating radiation, one or more real containers 4 configured to contain cargo, and detecting radiation from the irradiated one or more real containers 4. The irradiating and/or the detecting may be performed using one or more devices configured to inspect the real containers 4.

In other words the apparatus 3 may be used to acquire the plurality of observed images 102 used to generate the training data and/or to acquire the inspection image 1000.

In some examples, the processor 152 of the device 15 may be configured to perform, at least partly, at least some of the steps of the method 100 of Figure 1 and/or the method 200 of Figure 8 and/or the method 300 of Figure 9.

## Obtaining the training data

Referring back to Figure 1, the classifier 1 is generated based on the training data generated at S1. The training of the classifier 1 may be performed either using the generated training data or a combination of observed (i.e. real) training data and the generated training data.

The classifier 1 is trained using the training data, each corresponding to an instance when the classification (e.g. "object present" or "object absent") is known. As described in greater detail later, the training data may comprise:

the training images 101 of Figures 4 and 6 where an object 110 is present, the training images 101 being used on their own or in combination with observed images 102 where an object is present (i.e. "object absent"), and observed images 102 where no object is present (i.e. "object absent").

Referring back to Figures 5 and 6, the GAN 2 used at S11 comprises the generator 21 and the discriminator 22.

In some examples, during the training at S12, the generator 21 may generate synthetized images 103 (i.e. fake images) comprising synthetized objects 123 (i.e. fake objects), from at least random values (e.g. a random noise 124), based on the initial training data comprising observed images 102 (i.e. real images) comprising an observed object 120 (i.e. real object).

The observed images 102 may correspond to past images acquired *in situ* by the same device 15 that is being configured, e.g. using the apparatus 3 of the device 15 as depicted in Figure 2. Alternatively, the observed images 102 may have been obtained in a different environment, e.g. using a similar device (or equivalent set of sensors) installed in a different (but preferably similar) environment, or in a controlled test configuration in a laboratory environment.

In some examples, during the training at S12, the discriminator 22 may aim at classifying images comprising the synthetized images 103 (i.e. fake images) and the observed images 102 (i.e. real images) by their nature, i.e. real or fake.

The generator 21 is configured to try to fool the discriminator 22 that the synthetized images 103 are real. The discriminator 22 is configured to try to classify the synthetized images 103 as fake and the observed images 102 as real.

The generator 21 and the discriminator 22 compete with each other, based on a loss function. The quantification of the success of the generator 21 and of the discriminator 22 during the training at S12 is defined by the loss function. The discriminator 21 is configured to try to minimize the loss function. The generator 22 is configured to try to maximize the loss function.

In some examples, the loss function may be a function of the Euler-Lagrange type.

In some examples, the loss function may comprise at least one of a least mean square function and/or a combination of weighted Gaussian kernels.

In some examples, combination of the weighted Gaussian kernels comprises a combination $C(P,Q,D)$, such that:

$$C(P,Q,D) = 2 - \left(E_{x \sim P}\left[\sum_{k=1}^{n} w_k e^{-\frac{(1-D(x))^2}{\sigma_k^2}}\right] + E_{y \sim Q}\left[\sum_{k=1}^{n} w_k e^{-\frac{D(y)^2}{\sigma_k^2}}\right]\right)$$

where:

n is the number of kernels,

E[X] is the expectation of a X function;

D(x) is the output of the discriminator 22 for an image x,

D(y) is the output of the discriminator 22 for an image y,

P is the probability distribution of the observed images 102,

Q is the probability distribution of the synthetized images 103,

(wk) is a set of positive real numbers such that $\sum$wk=1, and

σk is a set of strictly positive numbers acting as standard deviations parameters for the Gaussian kernels.

In some examples P and Q may be absolutely continuous with respect to a measure. In a non-limiting example, Q may be absolutely continuous with respect to a Lebesgue measure, and P may or may not be absolutely continuous with respect to the Lebesgue measure.

In some examples, the combination C(P,Q,D) comprises a barycenter of any number of Gaussian kernels, and, as non-limiting examples, one to thirteen Gaussian kernels, such as three Gaussian kernels, five Gaussian kernels, seven Gaussian kernels or ten Gaussian kernels.

Referring back to Figure 6, the generator 21 comprises one or more deconvolution layers and a transposed convolution layer. The deconvolution layers may have e.g. a kernel size of 4x4 and/or e.g. a stride of 2x2. The kernel size of a layer is the size of the filter applied by the layer that needs to be trained, and the stride of a layer is the distance between two consecutives positions of the kernel while applying the filter to an input to the layer.

As illustrated in Figure 6, the generator 21 may comprise a module 211 configured to project and reshape the noise 124. The reshape step may fit the input 124 into a correct size for deconvolution steps that follow. The generator 21 may also comprise a first module 212, a second module 213, a third module 214 and a fourth module 215. Each module 212, 213, 214 and 215 may be a deconvolution layer. The first module 212 may have e.g. a kernel size of 4x4 and e.g. a stride of 2x2, the second module 213 may have e.g. a kernel size of 4x4 and e.g. a stride of 2x2, the third module 214 may have e.g. a kernel size of 4x4 and e.g. a stride of 2x2, and the fourth module 215 may have e.g. a kernel size of 4x4 and e.g. a stride of 2x2. The generator 21 may also comprise a fifth module 216. The fifth module 216 may be a transposed convolution layer, with e.g. a kernel size of 4x4. In Figure 6, the generated images 103 may have a 80x80 size.

Other architectures are also envisaged for the generator 21. For example, deeper architectures may be envisaged and/or an architecture of the same shape as the architecture shown in Figure 6 that would generate images 103 with sizes different from 80x80 (for example, 120x120, 150x150, 200x200 or multiple channel images) may be envisaged.

Referring back to Figure 6, the discriminator 22 comprises one or more convolution layers, and a fully connected linear activation layer. The convolution layers may comprise e.g. a kernel size of 4x4 and e.g. a stride of 2x2 or of 1x1.

The discriminator 22 may comprise a first module 221, a second module 222, a third module 223, a fourth module 224, and a fifth module 225. The first module 221 may have e.g. a kernel size of 4x4 and e.g. a stride of 2x2, the second module 222 may have e.g. a kernel size of 4x4 and e.g. a stride of 2x2, the third module 223 may have e.g. a kernel size of 4x4 and e.g. a stride of 2x2, the fourth module 224 may have e.g. a kernel size of 4x4 and e.g. a stride of 1x1. The fifth module 225 may be a fully connected, linear activation layer.

Other architectures are also envisaged for the discriminator 22. The discriminator 22 is closely tied to the generator 21, and may be modified similarly to the generator 21. Hence, the discriminator 22 may be deeper than the discriminator 22 shown in Figure 6 and/or adapted to input image sizes other than 80x80.

Referring back to Figures 4 to 6, generating, at S13, the plurality of training images 101 may comprise generating synthetized objects 123 corresponding to the type of interest (e.g. the synthetized objects 123 are generated by the generator 21). In some examples, each synthetized object 123 may be generated using at least a part of an observed object 120 in the one or more observed images 102.

As illustrated in Figure 7, generating the synthetized objects 123 may comprise at least one of: rotating (as shown in arrow 71) and/or translating (as shown in arrow 72) and/or flipping (as shown in arrow 73) at least a part of the object 120. Alternatively or additionally, in some examples, generating the synthetized objects 123 may comprise combining a part of a first object 120 with another part of a second object 120 (as shown in arrow 74), to obtain a new synthetized object 123 corresponding to the type of interest. In some examples the combining represented by the arrow 74 may exploit intermediate points in an appearance manifold of the object 120.

Referring back to Figures 2 and 3, the disclosure may be applied, as a non-limiting example, to inspection images 1000 comprising a representation 41 of a container 4 containing the object 111 corresponding to the type of interest.

In such an example, in the training at S12 of the generator 21 and of the discriminator 22, one or more observed images 102 may comprise a representation 410 of a container 4. In such an example, generating the synthetized images 103 (and the training images 101 as described below) may comprise using at least a part of a representation 410 of the container 4 in the one or more observed images 102. In some examples the whole of the representation 410 may be used in the synthetized images 103.

In some examples, generating the synthetized images 103 (and the training images 101) may further comprise using one or more synthetized objects 123. As illustrated in Figure 6, the synthetized images 103 may comprise at least a part of the representation 410 and one or more synthetized objects 123.

In some examples, generating the synthetized images 103 may comprise using a Beer-Lambert law for combining the at least a part of representation 410 of the container 4 in the one or more observed images 102 and the one or more synthetized objects 123.

The synthetized images 103 classified as real by the discriminator 22 may be used as the training images 101 as part of the training data for the classifier 1, e.g. as part of the training data where the object 110 is present.

Once the generator 21 has been trained, the generator 21 may generate synthetized images 103 that are realistic enough to be used as the training images 101 as part of the training data for the classifier 1, e.g. as part of the training data where the object 110 is present.

The GAN 2 enables generating a great amount of training images 101. In some examples the GAN 2 may generate several thousands of training images 101, for example several hundreds of thousands of training images 101, for examples several millions of training images 101, from a relatively small amount of initial training data comprising the observed images 102 (such as a few tens of observed images 102 or less). The GAN 2 enables generating training images 101 comprising realistic objects 110. The GAN 2 enables generating training images 101 comprising objects 110 which are not in the observed images 102, and the GAN 2 enables adding variability within a range of objects 110 and/or obtaining a greater range of objects 110 in the type of interest.

The generated training images 101, given their great numbers and/or their realistic objects 110 and/or their variability of the objects 110, enable improving the classifier 1.

**Generating the classifier**

Referring back to Figure 1, the classifier 1 is built by applying a machine learning algorithm to the training data. Any suitable machine learning algorithm may be used for building the classifier. For example, approaches based on convolutional neural network may be used.

The learning process is typically computationally intensive and may involve large volumes of training data. In some examples, the processor 12 of system 10 may comprise greater computational power and memory resources than the processor 152 of the device 15. The classifier generation is therefore performed, at least partly, remotely from the device 15, at the computer system 10. In some examples, at least steps S1 and/or S2 of the method 100 are performed by the processor 12 of the computer system 10. However, if sufficient processing power is available locally then the classifier learning could be performed (at least partly) by the processor 152 of the device 15.

The machine learning step involves inferring behaviours and patterns based on the training data and encoding the detected patterns in the form of the classifier 1.

Referring back to Figures 4 and 6, the training data may comprise the training images 101 obtained by the process at S1.

The classification labels for the training data (specifying known presence or absence states) may be known in advance. In some examples, the training data comprise the generated training data. The training data may comprise the training images 101 comprising one or more object 110 (as illustrated in Figure 4). The classification label for the training images 101 of Figure 4 is "object 11 present". The generated training data may be used on their own or in combination with observed images 102.

The training data also comprises training images not comprising any objects corresponding to the type of interest. The training images not comprising any objects corresponding to the type of interest may correspond to past data (e.g. past images) acquired *in situ* by the same device 15 that is being configured, e.g. using the apparatus 3 of the device 15 as depicted in Figure 2. Alternatively, the past data may have been obtained in a different environment, e.g. using a similar device (or equivalent set of sensors) installed in a different (but preferably similar) environment, or in a controlled test configuration in a laboratory environment. The classification label for the training images not comprising any objects corresponding to the type of interest may be known in advance (e.g. when training images are derived experimentally in a laboratory setting) or may be obtained using a secondary device. In some examples, a domain specialist may manually label the training images with ground truth classification (e.g. 'no object' for an image). The classification label for the training images not comprising any objects corresponding to the type of interest is "object absent" (i.e. "no object corresponding to the type of interest is present").

## Device manufacture

As illustrated in Figure 8, a method 200 of producing the device 15 configured to determine whether or not an object 11 corresponding to a type of interest is present in an inspection image 1000 generated using penetrating radiation, may comprise:

obtaining, at S21, a classifier 1 generated by the method 100 according to any aspects of the disclosure; and

storing, at S22, the obtained classifier 1 in the memory 151 of the device 15.

The classifier 1 may be stored, at S22, in the detection device 15. The classifier 1 may be created and stored using any suitable representation, for example as a data description comprising data elements specifying classification conditions and their classification outputs (e.g. presence or absence of the object 11). Such a data description could be encoded e.g. using XML or using a bespoke binary representation. The data description is then interpreted by the processor 152 running on the device 15 when applying the classifier 1.

Alternatively, the machine learning algorithm may generate the classifier 1 directly as executable code (e.g. machine code, virtual machine byte code or interpretable script). This may be in the form of a code routine that the device 15 can invoke to apply the classifier 1.

Regardless of the representation of the classifier 1, the classifier 1 effectively defines a decision algorithm (comprising a set of rules) for classifying a presence status of the object 11 based on input data (i.e. the inspection image 1000).

After the classifier 1 is generated, the classifier 1 is stored in the memory 151 of the device 15. The device 15 may be connected temporarily to the system 10 to transfer the generated classifier (e.g. as a data file or executable code) or transfer may occur using a storage medium (e.g. memory card). In a preferred approach, the classifier is transferred to the device 15 from the system 10 over the network connection 30 (this could include transmission over the Internet from a central location of the system 10 to a local network where the device 15 is located). The classifier 1 is then installed at the device 15. The classifier could be installed as part of a firmware update of device software, or independently.

Installation of the classifier 1 may be performed once (e.g. at time of manufacture or installation) or repeatedly (e.g. as a regular update). The latter approach can allow the classification performance of the classifier to be improved over time, as new training data becomes available.

## Applying the classifier to perform object detection

Presence or absence classification is based on the classifier 1.

After the device 15 has been configured with the classifier 1, the device 15 can use the classifier based on locally acquired inspection images 1000 to detect whether or not an object 11 is present in the inspection images 1000.

In general, the classifier 1 is configured to detect an object 11 corresponding to a type of interest in an inspection image 1000 generated using penetrating radiation, the inspection image 1000 comprising one or more features at least similar to the training data used to generate the classifier 1 by the machine learning algorithm.

Figure 9 shows a flow chart illustrating an example method 300 for determining whether or not an object corresponding to a type of interest is present in an inspection image generated using penetrating radiation. The method 300 is performed by the device 15 (as shown in Figure 2).

The method 300 comprises:

obtaining, at S31, an inspection image 1000;

applying, at S32, to the obtained image 1000, the classifier 1 generated by the method according to any aspects of the disclosure; and

determining, at S33, whether or not an object corresponding to the type of interest is present in the inspection image, based on the applying.

The classifier comprises a plurality of output states. In some examples the classifier is configured to output one of: a state corresponding to a presence of an object corresponding to the type of interest in the inspection image, and/or a state corresponding to an absence of an object corresponding to the type of interest in the inspection image.

Optionally the method 300 may further comprise outputting, e.g. at S34, trigger data to trigger an alarm in response to detecting an object 11 corresponding to the type of interest in the inspection image 1000.

The alarm may include an alarm signal (visual or aural), e.g. for triggering a further detection (e.g. manual inspection) of the container 4 (e.g. for verification).

## Further details and examples

The disclosure may be advantageous but is not limited to customs and/or security applications.

The disclosure typically applies to cargo inspection systems (e.g. sea or air cargo).

The apparatus 3 of Figure 2, acting as an inspection system, is configured to inspect the container 4, e.g. by transmission of inspection radiation through the container 4.

The container 4 configured to contain the cargo may be, as a non-limiting example, placed on a vehicle. In some examples, the vehicle may comprise a trailer configured to carry the container 4.

The apparatus 3 of Figure 2 may comprises a source 5 configured to generate the inspection radiation.

The radiation source 5 is configured to cause the inspection of the cargo through the material (usually steel) of walls of the container 4, e.g. for detection and/or identification of the cargo. Alternatively or additionally, a part of the inspection radiation may be transmitted through the container 4 (the material of the container 4 being thus transparent to the radiation), while another part of the radiation may, at least partly, be reflected by the container 4 (called "back scatter").

In some examples, the apparatus 3 may be mobile and may be transported from a location to another location (the apparatus 3 may comprise an automotive vehicle).

In the source 5, electrons are generally accelerated under a voltage comprised between 100keV and 15MeV.

In mobile inspection systems, the power of the X-ray source 5 may be e.g., between 100keV and 9.0MeV, typically e.g., 300keV, 2MeV, 3.5MeV, 4MeV, or 6MeV, for a steel penetration capacity e.g., between 40mm to 400mm, typically e.g., 300mm (12in).

In static inspection systems, the power of the X-ray source 5 may be e.g., between 1MeV and 10MeV, typically e.g., 9MeV, for a steel penetration capacity e.g., between 300mm to 450mm, typically e.g., 410mm (16.1in).

In some examples, the source 5 may emit successive x-ray pulses. The pulses may be emitted at a given frequency, comprised between 50 Hz and 1000 Hz, for example approximately 200 Hz.

According to some examples, detectors may be mounted on a gantry, as shown in Figure 2. The gantry for example forms an inverted "L". In mobile inspection systems, the gantry may comprise an electro-hydraulic boom which can operate in a retracted position in a transport mode (not shown on the Figures) and in an inspection position (Figure 2). The boom may be operated by hydraulic actuators (such as hydraulic cylinders). In static inspection systems, the gantry may comprise a static structure.

It should be understood that the inspection radiation source may comprise sources of other penetrating radiation, such as, as non-limiting examples, sources of ionizing radiation, for example gamma rays or neutrons. The inspection radiation source may also comprise sources which are not adapted to be activated by a power supply, such as radioactive sources, such as using Co60 or Cs137. In some examples, the inspection system comprises detectors, such as x-ray detectors, optional gamma and/or neutrons detectors, e.g., adapted to detect the presence of radioactive gamma and/or neutrons emitting materials within the load, e.g., simultaneously to the X-ray inspection. In some examples, detectors may be placed to receive the radiation reflected by the container 4.

In the context of the present disclosure, the container 4 may be any type of container, such as a holder or a box, etc. The container 4 may thus be, as non-limiting examples a palette (for example a palette of European standard, of US standard or of any other standard) and/or a train wagon and/or a tank and/or a boot of the vehicle and/or a "shipping container" (such as a tank or an ISO container or a non-ISO container or a Unit Load Device (ULD) container).

In some examples, one or more memory elements (e.g., the memory of one of the processors) can store data used for the operations described herein. This includes the memory element being able to store software, logic, code, or processor instructions that are executed to carry out the activities described in the disclosure.

A processor can execute any type of instructions associated with the data to achieve the operations detailed herein in the disclosure. In one example, the processor could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read only memory (EPROM), an electrically erasable programmable read only memory (EEPROM)), an ASIC that includes digital logic, software, code, electronic instructions, flash memory, optical disks, CD-ROMs, DVD ROMs, magnetic or optical cards, other types of machine-readable mediums suitable for storing electronic instructions, or any suitable combination thereof.

As one possibility, there is provided a computer program, computer program product, or computer readable medium, comprising computer program instructions to cause a programmable computer to carry out any one or more of the methods described herein. In example implementations, at least some portions of the activities related to the processors may be implemented in software. It is appreciated that software components of the present disclosure may, if desired, be implemented in ROM (read only memory) form. The software components may, generally, be implemented in hardware, if desired, using conventional techniques.

Other variations and modifications of the system will be apparent to the skilled in the art in the context of the present disclosure, and various features described above may have advantages with or without other features described above. The above embodiments are to be understood as illustrative examples.

Furthermore, equivalents and modifications not described above may also be employed without departing from the scope of the invention, which is defined in the accompanying claims.

**Claims**

1. A method for generating a classifier configured to detect an object corresponding to a type of interest in an inspection image generated using penetrating radiation, the method comprising:

   generating training data comprising a plurality of training images comprising objects corresponding to the type of interest, using a generative adversarial network comprising a generator and a discriminator,
   wherein generating the training data comprising training the generator and the discriminator using initial training data comprising a plurality of observed images generated using penetrating radiation, one or more observed images comprising:

      an object corresponding to the type of interest, and
      a representation of a container; and

   training the classifier by applying a machine learning algorithm, using the generated training data,
   wherein generating the training data further comprises:

      generating synthetized objects corresponding to the type of interest, each synthetized object being generated using at least a part of an object in the one or more observed images, and
      generating synthetized images using at least a part of a representation of the container in the one or more observed images, wherein generating the synthetized images further comprises using one or more synthetized objects,

   wherein the generator and the discriminator compete based on a loss function,
   **characterised in that** the loss function comprises a combination of weighted Gaussian kernels,
   wherein the combination of the weighted Gaussian kernels comprises a combination C(P,Q,D), such that:

$$C(P,Q,D) = 2 - \left(E_{x \sim P}\left[\sum_{k=1}^{n} w_k e^{-\frac{(1-D(x))^2}{\sigma_k^2}}\right] + E_{y \sim Q}\left[\sum_{k=1}^{n} w_k e^{-\frac{D(y)^2}{\sigma_k^2}}\right]\right)$$

   where:

      n is the number of kernels,
      E[X] is the expectation of function X,
      D(x) is the output of the discriminator for an image x,
      D(y) is the output of the discriminator for an image y,
      P is the probability distribution of the observed images,
      Q is the probability distribution of the synthetized images,
      $(w_k)$ is a set of positive real numbers such that $\Sigma w_k = 1$, and
      $\sigma_k$ is a set of strictly positive numbers acting as standard deviations parameters for the Gaussian kernels.

2. The method of claim 1, wherein generating the synthetized objects comprises at least one of: rotating and/or translating and/or flipping at least a part of the object in the one or more observed images and/or combining a part of a first object with another part of a second object in the one or more observed images, or

   wherein the loss function further comprises a least mean square function,
   optionally wherein the combination C(P,Q,D) comprises a barycenter of any number of Gaussian kernels, such as three Gaussian kernels, five Gaussian kernels, seven Gaussian kernels or ten Gaussian kernels.

3. The method of any one of claims 1 to 2, wherein the generator comprises one or more deconvolution layers and a transposed convolution layer, optionally wherein the one or more deconvolution layers have a kernel size of 4x4 and a stride of 2x2, or

wherein the discriminator comprises one or more convolution layers and a fully connected linear activation layer, optionally wherein the one or more convolution layers have a kernel size of 4x4 and a stride of 2x2 or of 1x1, or wherein the inspection image comprises a representation of a container containing the object corresponding to the type of interest.

4. The method of any of claims 1 to 3, wherein generating the synthetized images comprises using a Beer-Lambert law.

5. The method of any one of claims 1 to 4, further comprising obtaining the observed images, optionally comprising:

irradiating, using penetrating radiation, one or more real objects corresponding to the type of interest and/or one or more real containers configured to contain cargo, and
detecting radiation from the irradiated one or more real objects and/or the irradiated one or more real containers, optionally wherein the irradiating and/or the detecting are performed using one or more devices configured to inspect real containers.

6. The method of any of the preceding claims, wherein the classifier is configured to detect an object corresponding to a type of interest in an inspection image generated using penetrating radiation, the inspection image comprising one or more features at least similar to the training data used to generate the classifier by the machine learning algorithm, or

wherein the classifier comprises a plurality of output states, optionally wherein the classifier is configured to output one of: a state corresponding to a presence of an object corresponding to the type of interest in the inspection image, and/or a state corresponding to an absence of an object corresponding to the type of interest in the inspection image, or
wherein the machine learning algorithm comprises a convolutional neural network, or
wherein the method is performed at a computer system separate, optionally remote, from a device configured to inspect real containers.

7. A method for determining whether an object corresponding to a type of interest is present in an inspection image generated using penetrating radiation, the method comprising:

obtaining an inspection image;
applying, to the obtained image, a classifier generated by the method according to any one of claims 1 to 6; and
determining whether or not an object corresponding to the type of interest is present in the inspection image, based on the applying,
optionally wherein obtaining the inspection image comprises:

irradiating, using penetrating radiation, one or more real containers configured to contain cargo; and
detecting radiation from the irradiated one or more real containers.

8. A method of producing a device configured to determine whether an object corresponding to a type of interest is present in an inspection image generated using penetrating radiation, the method comprising:

obtaining a classifier generated by the method according to any one of claims 1 to 6; and
storing the obtained classifier in a memory of the device, optionally wherein the storing comprises transmitting the generated classifier to the device via a network, the device receiving and storing the classifier.

9. The method according to any of the preceding claims, wherein the classifier is generated, stored and/or transmitted in the form of one or more of:

a data representation of the classifier;
executable code for applying the classifier to one or more inspection images.

10. The method according to any of the preceding claims, wherein the type of interest comprises at least one of:

a threat, such as a weapon and/or an explosive material and/or a radioactive material; and/or

a contraband product, such as drugs and/or cigarettes.

11. The method according to any of the preceding claims, wherein using penetrating radiation comprises irradiating by transmission.

12. A device configured to determine whether an object corresponding to a type of interest is present in an inspection image generated using penetrating radiation, the device comprising a memory storing a classifier generated by the method according to any one of claims 1 to 6.

13. The device of claim 12, further comprising a processor, and wherein the memory of the device further comprises instructions which, when executed by the processor, enable the processor to perform the method of any one of claims 7 to 11.

14. A computer program product comprising instructions which, when executed by a processor, enable the processor to perform the method according to any one of claims 1 to 11 or to be implemented on the device according to claim 12 or claim 13.

**Patentansprüche**

1. Ein Verfahren zur Erzeugung eines Klassierers, der zum Detektieren eines Objekts ausgelegt ist, das einem Typen von Interesse in einem unter Verwendung von durchdringender Strahlung erzeugten Inspektionsbild entspricht, wobei das Verfahren Folgendes umfasst:

Erzeugen von Trainingsdaten, die eine Vielzahl von Trainingsbildern umfassen, die Objekte umfassen, die dem Typen von Interesse entsprechen, unter Verwendung eines Generative Adversarial Network, das einen Generator und einen Diskriminator umfasst,
wobei das Erzeugen der Trainingsdaten das Trainieren des Generators und des Diskriminators unter Verwendung initialer Trainingsdaten umfasst, die eine Vielzahl von beobachteten Bildern umfassen, die unter Verwendung von durchdringender Strahlung erzeugt wurden, wobei eines oder mehrere der beobachteten Bilder Folgendes umfassen:

ein Objekt, das dem Typen von Interesse entspricht, und
eine Darstellung eines Containers; und

Trainieren des Klassierers durch Anwenden eines Algorithmus des maschinellen Lernens unter Verwendung der erzeugten Trainingsdaten,
wobei das Erzeugen der Trainingsdaten ferner Folgendes umfasst:

Erzeugen synthetisierter Objekte, die dem Typen von Interesse entsprechen, wobei jedes synthetisierte Objekt unter Verwendung mindestens eines Teils eines Objekts in dem einen oder den mehreren beobachteten Bildern erzeugt wird, und
Erzeugen synthetisierter Bilder unter Verwendung mindestens eines Teils einer Darstellung des Containers in dem einen oder den mehreren beobachteten Bildern, wobei das Erzeugen der synthetisierten Bilder ferner das Verwenden eines oder mehrerer synthetisierter Objekte umfasst,

wobei der Generator und der Diskriminator auf der Grundlage einer Verlustfunktion konkurrieren, **dadurch gekennzeichnet, dass** die Verlustfunktion eine Kombination von gewichteten Gaußkernen umfasst,
wobei die Kombination der gewichteten Gaußkerne eine Kombination C(P,Q,D) umfasst, sodass:

$$C(P, Q, D) = 2 - (E_{x \sim P} \left[ \sum_{k=1}^{n} w_k e^{-\frac{(1-D(x))^2}{\sigma_k^2}} \right] + E_{y \sim Q} \left[ \sum_{k=1}^{n} w_k e^{-\frac{D(y)^2}{\sigma_k^2}} \right])$$

wobei:

n die Anzahl von Kernen ist,

E[X] die Erwartung von Funktion X ist,

D(x) die Ausgabe des Diskriminators für ein Bild x ist,

D(y) die Ausgabe des Diskriminators für ein Bild y ist,

P die Wahrscheinlichkeitsverteilung der beobachteten Bilder ist,

Q die Wahrscheinlichkeitsverteilung der synthetisierten Bilder ist,

$(w_k)$ ein Satz von positiven reellen Zahlen ist, sodass $\Sigma w_k = 1$, und

$\sigma_k$ ein Satz von genau positiven Zahlen ist, die als Standardabweichungsparameter für die Gaußkerne fungieren.

2. Verfahren nach Anspruch 1, wobei das Erzeugen der synthetisierten Objekte mindestens eines der Folgenden umfasst: Rotieren und/oder Umsetzen und/oder Umdrehen mindestens eines Teils des Objekts in dem einen oder den mehreren beobachteten Bildern und/oder Kombinieren eines Teils eines ersten Objekts mit einem anderen Teil eines zweiten Objekts in dem einen oder den mehreren beobachteten Bildern oder

wobei die Verlustfunktion ferner eine Funktion des kleinsten quadratischen Mittelwerts umfasst,
wobei die Kombination C(P,Q,D) optional ein Baryzentrum einer beliebigen Anzahl von Gaußkernen umfasst, wie etwa drei Gaußkerne, fünf Gaußkerne, sieben Gaußkerne oder zehn Gaußkerne.

3. Verfahren nach einem der Ansprüche 1 bis 2, wobei der Generator eine oder mehrere Entfaltungsschichten und eine transponierte Faltungsschicht umfasst, wobei die eine oder die mehreren Entfaltungsschichten optional eine Kerngröße von 4 x 4 und einen Schritt von 2 x 2 aufweisen, oder

wobei der Diskriminator eine oder mehrere Faltungsschichten und eine vollständig verbundene lineare Aktivierungsschicht umfasst, wobei die eine oder die mehreren Faltungsschichten optional eine Kerngröße von 4 x 4 und einen Schritt von 2 x 2 oder von 1 x 1 aufweisen, oder
wobei das Inspektionsbild eine Darstellung eines Containers umfasst, der das Objekt enthält, das dem Typen von Interesse entspricht.

4. Verfahren nach einem der Ansprüche 1 bis 3, wobei das Erzeugen der synthetisierten Bilder ein Lambert-Beersches Gesetz umfasst.

5. Verfahren nach einem der Ansprüche 1 bis 4, das ferner das Erhalten der beobachteten Bilder umfasst, das optional Folgendes umfasst:

Bestrahlen, unter Verwendung von durchdringender Strahlung, eines oder mehrerer reeller Objekte, die dem Typen von Interesse entsprechen, und/oder eines oder mehrerer reeller Container, die dazu ausgelegt sind, Ladung zu enthalten, und
Detektieren von Strahlung von dem einen oder den mehreren bestrahlten reellen Objekten und/oder dem einen oder mehreren bestrahlten reellen Containern,
wobei das Bestrahlen und/oder das Detektieren optional unter Verwendung einer oder mehrerer Vorrichtungen durchgeführt werden, die zum Inspizieren reeller Container ausgelegt sind.

6. Verfahren nach einem der vorhergehenden Ansprüche, wobei der Klassierer dazu ausgelegt ist, ein Objekt, das einem Typ von Interesse entspricht, in einem Inspektionsbild zu detektieren, das unter Verwendung von durchdringender Strahlung erzeugt wurde, wobei das Inspektionsbild ein oder mehrere Merkmale umfasst, die mindestens den Trainingsdaten ähneln, die zum Erzeugen des Klassierers durch den Algorithmus des maschinellen Lernens verwendet wurden, oder

wobei der Klassierer eine Vielzahl von Ausgabezuständen umfasst, wobei der Klassierer optional dazu ausgelegt ist, eines der Folgenden auszugeben: einen Zustand, der einem Vorhandensein eines Objekts, das dem Typen von Interesse entspricht, in dem Inspektionsbild entspricht, und/oder einen Zustand, der einer Abwesenheit eines Objekts, das dem Typen von Interesse entspricht, in dem Inspektionsbild entspricht, oder
wobei der Algorithmus des maschinellen Lernens ein neuronales Faltungsnetz umfasst oder
wobei das Verfahren an einem Computersystem durchgeführt wird, das separat, optional fern, von einer Vorrichtung ist, die zur Inspektion reeller Container ausgelegt ist.

7. Ein Verfahren zur Bestimmung, ob ein Objekt, das einem Typen von Interesse entspricht, in einem unter Verwendung von durchdringender Strahlung erzeugten Inspektionsbild vorhanden ist, wobei das Verfahren Folgendes umfasst:

Erhalten eines Inspektionsbilds;

Anwenden eines durch das Verfahren nach einem der Ansprüche 1 bis 6 erzeugten Klassierers auf das erhaltene Bild; und

Bestimmen, ob ein Objekt, das dem Typen von Interesse entspricht, in dem Inspektionsbild vorhanden ist oder nicht, auf der Grundlage des Anwendens,

wobei das Erhalten des Inspektionsbilds optional Folgendes umfasst:

Bestrahlen, unter Verwendung von durchdringender Strahlung, eines oder mehrerer reeller Container, die dazu ausgelegt sind, Ladung zu enthalten; und

Detektieren von Strahlung von dem einen oder den mehreren bestrahlten reellen Containern.

8. Ein Verfahren zum Herstellen einer Vorrichtung, die dazu ausgelegt ist, zu bestimmen, ob ein Objekt, das einem Typen von Interesse entspricht, in einem unter Verwendung von durchdringender Strahlung erzeugten Inspektionsbild vorhanden ist, wobei das Verfahren Folgendes umfasst:

Erhalten eines durch das Verfahren nach einem der Ansprüche 1 bis 6 erzeugten Klassierers; und

Speichern des erhaltenen Klassierers in einem Speicher der Vorrichtung, wobei das Speichern optional das Übermitteln des erzeugten Klassierers an die Vorrichtung über ein Netz umfasst, wobei die Vorrichtung den Klassierer empfängt und speichert.

9. Verfahren nach einem der vorhergehenden Ansprüche, wobei der Klassierer in Form von einem oder mehreren der Folgenden erzeugt, gespeichert und/oder übermittelt wird:

einer Datendarstellung des Klassierers;

ausführbarem Code zum Anwenden des Klassierers auf ein oder mehrere Inspektionsbilder.

10. Verfahren nach einem der vorhergehenden Ansprüche, wobei der Typ von Interesse mindestens eines der Folgenden umfasst:

eine Bedrohung, wie etwa eine Waffe und/oder ein Sprengmaterial und/oder ein radioaktives Material; und/oder eine Schmuggelware, wie etwa Drogen und/oder Zigaretten.

11. Verfahren nach einem der vorhergehenden Ansprüche, wobei die Verwendung von durchdringender Strahlung das Bestrahlen mittels Transmission umfasst.

12. Eine Vorrichtung, die dazu ausgelegt ist, zu bestimmen, ob ein Objekt, das einem Typen von Interesse entspricht, in einem unter Verwendung von durchdringender Strahlung erzeugten Inspektionsbild vorhanden ist, wobei die Vorrichtung einen Speicher umfasst, der einen durch das Verfahren nach einem der Ansprüche 1 bis 6 erzeugten Klassierer speichert.

13. Vorrichtung nach Anspruch 12, die ferner einen Prozessor umfasst, und wobei der Speicher der Vorrichtung ferner Anweisungen umfasst, die es, wenn sie von dem Prozessor ausgeführt werden, dem Prozessor ermöglichen, das Verfahren nach einem der Ansprüche 7 bis 11 durchzuführen.

14. Ein Computerprogrammprodukt, das Anweisungen umfasst, die es, wenn sie von einem Prozessor ausgeführt werden, dem Prozessor ermöglichen, das Verfahren nach einem der Ansprüche 1 bis 11 durchzuführen oder auf der Vorrichtung nach Anspruch 12 oder Anspruch 13 implementiert zu werden.

## Revendications

1. Procédé de génération d'un classificateur configuré pour détecter un objet correspondant à un type d'intérêt dans une image d'inspection générée en utilisant un rayonnement pénétrant, le procédé comprenant :

la génération de données d'apprentissage comprenant une pluralité d'images d'apprentissage comprenant des objets correspondant au type d'intérêt, en utilisant un réseau antagoniste génératif comprenant un générateur et un discriminateur,

dans lequel la génération des données d'apprentissage comprend l'apprentissage du générateur et du discriminateur en utilisant des données d'apprentissage initiales comprenant une pluralité d'images observées générées en utilisant un rayonnement pénétrant, une ou plusieurs images observées comprenant :

un objet correspondant au type d'intérêt, et
une représentation d'un conteneur ; et

l'apprentissage du classificateur par application d'un algorithme d'apprentissage automatique, en utilisant les données d'apprentissage générées,
dans lequel la génération des données d'apprentissage comprend en outre :

la génération d'objets synthétisés correspondant au type d'intérêt, chaque objet synthétisé étant généré en utilisant au moins une partie d'un objet dans les une ou plusieurs images observées, et
la génération d'images synthétisées en utilisant au moins une partie d'une représentation du conteneur dans les une ou plusieurs images observées, la génération des images synthétisées comprenant en outre l'utilisation d'un ou plusieurs objets synthétisés,

dans lequel le générateur et le discriminateur s'affrontent sur la base d'une fonction de perte, **caractérisée en ce que** la fonction de perte comprend une combinaison de noyaux gaussiens pondérés,
dans lequel la combinaison des noyaux gaussiens pondérés comprend une combinaison C(P, Q, D), telle que :

$$C(P, Q, D) = 2 - (E_{x \sim P}\left[\sum_{k=1}^{n} w_k e^{-\frac{(1-D(x))^2}{\sigma_k^2}}\right] + E_{y \sim Q}\left[\sum_{k=1}^{n} w_k e^{-\frac{D(y)^2}{\sigma_k^2}}\right])$$

où :

n est le nombre de noyaux,
E[X] est l'espérance de la fonction X,
D(x) est la sortie du discriminateur pour une image x,
D(y) est la sortie du discriminateur pour une image y,
P est la distribution de probabilité des images observées,
Q est la distribution de probabilité des images synthétisées,
$(w_k)$ est un ensemble de nombres réels positifs tels que $\Sigma w_k = 1$, et
$\sigma_k$ est un ensemble de nombres strictement positifs agissant comme des paramètres d'écarts-types pour les noyaux gaussiens.

2. Procédé selon la revendication 1, dans lequel la génération des objets synthétisés comprend au moins l'un de : une rotation et/ou un déplacement en translation et/ou un retournement d'au moins une partie de l'objet dans les une ou plusieurs images observées et/ou une combinaison d'une partie d'un premier objet avec une autre partie d'un deuxième objet dans les une ou plusieurs images observées, ou

dans lequel la fonction de perte comprend en outre une fonction de moyenne quadratique minimale,
optionnellement dans lequel la combinaison C(P, Q, D) comprend un barycentre de n'importe quel nombre de noyaux gaussiens, tel que trois noyaux gaussiens, cinq noyaux gaussiens, sept noyaux gaussiens ou dix noyaux gaussiens.

3. Procédé selon l'une quelconque des revendications 1 ou 2, dans lequel le générateur comprend une ou plusieurs couches de déconvolution et une couche de convolution transposée, optionnellement dans lequel les une ou plusieurs couches de déconvolution ont une taille de noyau de 4x4 et un stride de 2x2, ou

dans lequel le discriminateur comprend une ou plusieurs couches de convolution et une couche d'activation linéaire entièrement connectée, optionnellement dans lequel les une ou plusieurs couches de convolution ont une taille de noyau de 4x4 et un stride de 2x2 ou de 1x1, ou
dans lequel l'image d'inspection comprend une représentation d'un conteneur qui contient l'objet correspondant au type d'intérêt.

4. Procédé selon l'une quelconque des revendications 1 à 3, dans lequel la génération des images synthétisées comprend l'utilisation d'une loi de Beer-Lambert.

5. Procédé selon l'une quelconque des revendications 1 à 4, comprenant en outre l'obtention des images observées, comprenant optionnellement :

l'irradiation, en utilisant un rayonnement pénétrant, d'un ou plusieurs objets réels correspondant au type d'intérêt et/ou d'un ou plusieurs conteneurs réels configurés pour contenir du fret, et
la détection d'un rayonnement provenant des un ou plusieurs objets réels irradiés et/ou des un ou plusieurs conteneurs réels irradiés,
optionnellement dans lequel l'irradiation et/ou la détection sont effectuées en utilisant un ou plusieurs dispositifs configurés pour inspecter des conteneurs réels.

6. Procédé selon l'une quelconque des revendications précédentes, dans lequel le classificateur est configuré pour détecter un objet correspondant à un type d'intérêt dans une image d'inspection générée en utilisant un rayonnement pénétrant, l'image d'inspection comprenant une ou plusieurs caractéristiques au moins similaires aux données d'apprentissage utilisées pour générer le classificateur par l'algorithme d'apprentissage automatique, ou

dans lequel le classificateur comprend une pluralité d'états de sortie, optionnellement dans lequel le classificateur est configuré pour sortir l'un de : un état correspondant à une présence d'un objet correspondant au type d'intérêt dans l'image d'inspection, et/ou un état correspondant à une absence d'un objet correspondant au type d'intérêt dans l'image d'inspection, ou
dans lequel l'algorithme d'apprentissage automatique comprend un réseau neuronal convolutif, ou
dans lequel le procédé est mis en oeuvre sur un système informatique distinct, optionnellement distant, d'un dispositif configuré pour inspecter des conteneurs réels.

7. Procédé permettant de déterminer si un objet correspondant à un type d'intérêt est présent dans une image d'inspection générée en utilisant un rayonnement pénétrant, le procédé comprenant :

l'obtention d'une image d'inspection ;
l'application, sur l'image obtenue, d'un classificateur généré par le procédé selon l'une quelconque des revendications 1 à 6 ; et
le fait de déterminer si un objet correspondant au type d'intérêt est présent ou non dans l'image d'inspection, sur la base de l'application,
optionnellement dans lequel l'obtention de l'image d'inspection comprend :

l'irradiation, en utilisant un rayonnement pénétrant, d'un ou plusieurs conteneurs réels configurés pour contenir du fret ; et
la détection d'un rayonnement provenant des un ou plusieurs conteneurs réels irradiés.

8. Procédé de production d'un dispositif configuré pour déterminer si un objet correspondant à un type d'intérêt est présent dans une image d'inspection générée en utilisant un rayonnement pénétrant, le procédé comprenant :

l'obtention d'un classificateur généré par le procédé selon l'une quelconque des revendications 1 à 6 ; et
le stockage du classificateur obtenu dans une mémoire du dispositif, le stockage comprenant optionnellement une transmission du classificateur généré au dispositif par l'intermédiaire d'un réseau, le dispositif recevant et stockant le classificateur.

9. Procédé selon l'une quelconque des revendications précédentes, dans lequel le classificateur est généré, stocké et/ou transmis sous la forme d'un ou plusieurs de :

une représentation des données du classificateur ;
un code exécutable pour l'application du classifieur à une ou plusieurs images d'inspection.

10. Procédé selon l'une quelconque des revendications précédentes, dans lequel le type d'intérêt comprend au moins l'un de :

une menace, telle qu'une arme et/ou une matière explosive et/ou une matière radioactive ; et/ou
un produit de contrebande, tel que des drogues et/ou des cigarettes.

**11.** Procédé selon l'une quelconque des revendications précédentes, dans lequel l'utilisation d'un rayonnement pénétrant comprend une irradiation par transmission.

**12.** Dispositif configuré pour déterminer si un objet correspondant à un type d'intérêt est présent dans une image d'inspection générée en utilisant un rayonnement pénétrant, le dispositif comprenant une mémoire dans laquelle est stocké un classificateur généré par le procédé selon l'une quelconque des revendications 1 à 6.

**13.** Dispositif selon la revendication 12, comprenant en outre un processeur, et dans lequel la mémoire du dispositif comprend en outre des instructions qui, lorsqu'elles sont exécutées par le processeur, permettent au processeur d'exécuter le procédé selon l'une quelconque des revendications 7 à 11.

**14.** Produit sous forme de programme informatique comprenant des instructions qui, lorsqu'elles sont exécutées par un processeur, permettent au processeur d'exécuter le procédé selon l'une quelconque des revendications 1 à 11 ou d'être mis en œuvre sur le dispositif selon la revendication 12 ou la revendication 13.

Generating
training
data

S1

100

Training
the
classifier

S2

Fig. 1

3

5

111

4

152

151

1

153

30

13

12

11

15

10

Fig. 2

Fig. 3

Fig. 4

Fig. 5

Fig. 6

120

123

71

72

74

73

Fig. 7

Obtaining a
classifier

S21

200

Storing the
classifier

S22

Fig. 8

S31 ── Obtaining image

300

S32 ── Applying classifier

S33 ── Determining presence or absence → Outputting trigger data ── S34

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A GAN-Based Image Generation Method for X-Ray Security Prohibited Items. **ZHAO ZIHAO et al.** ADVANCES IN DATABASES AND INFORMATION SYSTEMS. SPRINGER INTERNATIONAL PUBLISHING, 02 November 2018, 420-430